# FASCICULE DE BREVET EUROPEEN

(11) **EP 2 663 214 B1**
(45) Date de publication et mention de la délivrance du brevet: **30.12.2015**
(21) Numéro de dépôt: 12702580.7
(22) Date de dépôt: 03.01.2012
(51) Int. Cl.: A47F 7/02, B60R 7/08

(54) **PORTE-OBJETS**
OBJEKTHALTER
OBJECT HOLDER

(30) Priorité: 10.01.2011 FR 1150197
(43) Date de publication de la demande: 20.11.2013
(73) Titulaire: Sanderson, Henry, 4835 CC Breda (NL); Peyridieu, Philippe, 20131 Milano (IT)
(72) Inventeur: Sanderson, Henry, 4835 CC Breda (NL); Peyridieu, Philippe, 20131 Milano (IT)
(74) Mandataire: Chaillot, Geneviève
(86) Numéro de dépôt international: PCT/FR2012/050014
(87) Numéro de publication internationale: WO 2012/095591

(56) Documents cités:
- US-A- 5 082 225
- US-A1- 2003 229 971
- US-B1- 6 378 827

## Description

La présente invention concerne un porte-objets que l'on fixe de manière amovible à un support, tel qu'un pare-soleil de véhicule, et qui retient en position un ou plusieurs objets, par exemple une paire de lunettes.

Le déposant s'est aperçu que le rangement temporaire des lunettes pose de nombreux problèmes du fait que les lunettes sont des objets fragiles et de petites dimensions qui risquent d'être perdus ou cassés si leur mode de rangement n'est pas approprié.

Il existe des porte-lunettes destinés à être fixés au pare-soleil d'un véhicule et à retenir la paire de lunettes entre le pare-soleil et le porte-lunettes.

En particulier, le brevet américain US 5,966,783 divulgue un porte-lunettes réalisé en une seule pièce de matériau élastiquement déformable et comprenant deux languettes en regard l'une de l'autre, une partie de liaison en arc de cercle reliant une extrémité de la première languette à l'extrémité correspondante de la seconde languette de telle sorte que, lorsque le porte-lunettes est fixé sur un support, les surfaces intérieures des languettes et de la partie de liaison viennent épouser le bord du support, les extrémités libres des languettes étant généralement tournées vers le haut.

L'une des languettes porte sur sa surface inférieure des petites saillies qui espacent ladite languette, dite de blocage, vis-à-vis du support lorsque le porte-lunettes y est fixé, de façon à créer un espace dans lequel sont reçues les branches d'une paire de lunettes.

Une languette d'actionnement se projette vers l'extérieur à partir de la surface extérieure de la partie de liaison ou de la languette de blocage. La languette d'actionnement étant d'un seul tenant avec la languette portant les saillies, une action de traction ou de poussée sur la languette d'actionnement amène la languette de blocage à s'écarter du support, permettant la mise en place ou le retrait des branches d'une paire de lunettes dans l'espace entre la languette de blocage et le support.

Un inconvénient du porte-lunettes décrit ci-dessus est qu'il risque de se décrocher du support lorsque l'utilisateur appuie ou tire sur la languette d'actionnement.

En outre, le fait de prévoir une telle languette d'actionnement en saillie est inesthétique et complique le procédé de fabrication du porte-lunettes.

La présente invention vise à résoudre les problèmes mentionnés ci-dessus, en proposant un porte-lunettes de forme simple pour un effet esthétique et un procédé de fabrication simple et peu coûteux, et qui ne risque pas de se détacher du support lors du retrait ou de la mise en place des lunettes.

Le déposant s'est en outre rendu compte qu'un tel porte-lunettes n'est pas limité à une application aux paires de lunettes, mais peut être utilisé pour supporter tout type d'objet.

La présente invention a donc pour objet un porte-objets destiné à être fixé de manière amovible sur le bord d'un support de type plaque, lequel porte-objets comprend une languette ayant une extrémité libre et portant à son autre extrémité, en formant une zone de liaison, une pièce en retour vers la languette, la languette et la pièce en retour étant déformables élastiquement de telle sorte que le porte-objets est apte, en position dite de repos du porte-objets, à pincer le bord du support entre les régions d'extrémité libre de la languette et de la pièce en retour, et, en position dite d'accrochage, à retenir par accrochage au moins un objet entre le support et la languette, caractérisé par le fait que la languette porte, au voisinage de la zone de liaison, une saillie qui est dirigée vers la pièce en retour et dont l'extrémité libre est en contact avec le support en position de repos du porte-objets, la zone de liaison étant écartée du support.

L'extrémité libre de la saillie constitue ainsi un point de pivotement de la languette lorsque l'utilisateur applique une pression sur la surface extérieure de la zone de liaison, le porte-objets étant en position de repos, de façon à permettre l'écartement de la région d'extrémité de la languette du bord du support par effet de levier, lequel écartement permettant la mise en place et le retrait du ou des objets entre le support et la languette.

En d'autres termes, la présence de la saillie, le fait que la languette et la partie en retour sont déformables élastiquement et le fait que la zone de liaison entre la languette et la pièce en retour est écartée du support, lorsque le porte-objets est fixé au support et qu'aucun objet n'y est accroché, permettent en combinaison de placer l'objet dans le porte-objets ou de le retirer de celui-ci par effet de levier par simple pression sur la zone de liaison du porte-objets. Ainsi, l'utilisation du porte-objets est particulièrement aisée.

Les caractéristiques selon lesquelles le porte-objets est réalisé en un matériau déformable élastiquement et ne se conforme pas au contour du support sur lequel il est fixé, permettent de fixer le porte-objets sur divers supports.

De préférence, la saillie consiste en une patte dont la bordure libre forme l'extrémité libre de la saillie en contact avec le support en position de repos du porte-objets.

De préférence, la patte est transversale à la ligne longitudinale moyenne de la languette.

La patte s'étend avantageusement sur toute la largeur de la languette, rendant ainsi maximale la surface de contact avec le support de façon à faciliter l'effet de levier.

La patte peut être continue ou interrompue.

De préférence, la saillie, le cas échéant la patte, constitue une saillie de retenue du ou des objets accrochés au porte-objets, le ou les objets étant accrochés par suspension par une partie de ceux-ci se trouvant dans l'espace formé entre la saillie, la languette et le support lorsque le porte-objets est fixé au support.

De préférence, la languette, la saillie et la pièce en retour sont réalisées en une seule pièce.

De ce fait, le procédé de fabrication du porte-objets est simple et peu coûteux.

Bien entendu, le porte-objets peut être réalisé par assemblage de plusieurs pièces les unes aux autres.

Toute matière présentant, lorsqu'elle est déformée, un effet d'élasticité permettant le pincement du porte-objets sur le support peut être utilisée pour le porte-objets. On peut par exemple citer les matières plastiques telles que le polycarbonate, les métaux à mémoire de forme, etc.

La région d'extrémité libre de la languette peut être recourbée dans une direction opposée à la direction de projection de la saillie de façon à définir une zone arrondie.

Ainsi, lors de la fixation du porte-objets au support, la languette n'abîme pas le support car c'est une zone en arrondie qui vient au contact du support.

Lorsque le porte-objets n'est pas fixé au support, l'extrémité libre de la pièce en retour peut se trouver au voisinage de la languette, à mi-longueur de celle-ci.

Cela permet de limiter davantage le risque de détachement du porte-objets vis-à-vis du support sur lequel il est fixé, en renforçant le blocage du porte-objets sur le support tout en facilitant l'effet de levier.

La zone de liaison entre la languette et la pièce en retour peut avoir une forme en arc de cercle, recourbée vers la languette.

Cette forme permet à l'utilisateur du porte-objets d'exercer une pression sur la zone de liaison en arc de cercle sans effort et de manière commode.

La languette peut être effilée de la pièce en retour à l'extrémité libre de la languette. Cela permet d'optimiser la quantité de matière utilisée, pour diminuer le coût de fabrication, tout en conférant au porte-objets un aspect esthétique à l'oeil.

De préférence, la saillie forme un angle droit avec la languette. Une telle configuration permet là encore de renforcer le blocage du porte-objets en position de repos de ce dernier tout en facilitant l'effet de levier pour son ouverture.

De préférence, le porte-objets est réalisé en matière plastique injectée.

De ce fait, le porte-objets est léger et peu coûteux.

Le porte-objets peut constituer un porte-lunettes, l'espace formé, en position de repos du porte-objets, par le support, la saillie et la région de la languette située entre la saillie et la région d'extrémité libre de la languette, étant de dimension suffisante pour recevoir les branches repliées l'une contre l'autre ou le nez d'une paire de lunettes.

Pour mieux illustrer l'objet de la présente invention, on va en décrire ci-après un mode de réalisation préféré avec référence aux dessins annexés.

Sur ces dessins :
- la Figure 1 est une vue de côté du porte-objets selon la présente invention ;
- la Figure 2 est une vue en perspective du porte-objets selon la présente invention ;
- la Figure 3 est une vue de côté représentant le porte-objets selon la présente invention au tout début de sa mise en place sur le bord d'un support ;
- la Figure 4 est une vue de côté représentant le porte-objets selon la présente invention en position de repos, fixé sur le bord du support et aucun objet accroché ; et
- les Figures 5 et 6 sont des vues de côté représentant le porte-objets selon la présente invention fixé sur le bord du support, respectivement en position ouverte, en vue de la mise en place d'une paire de lunettes, et en position fermée d'accrochage avec la paire de lunettes retenue entre le porte-objets et le support.

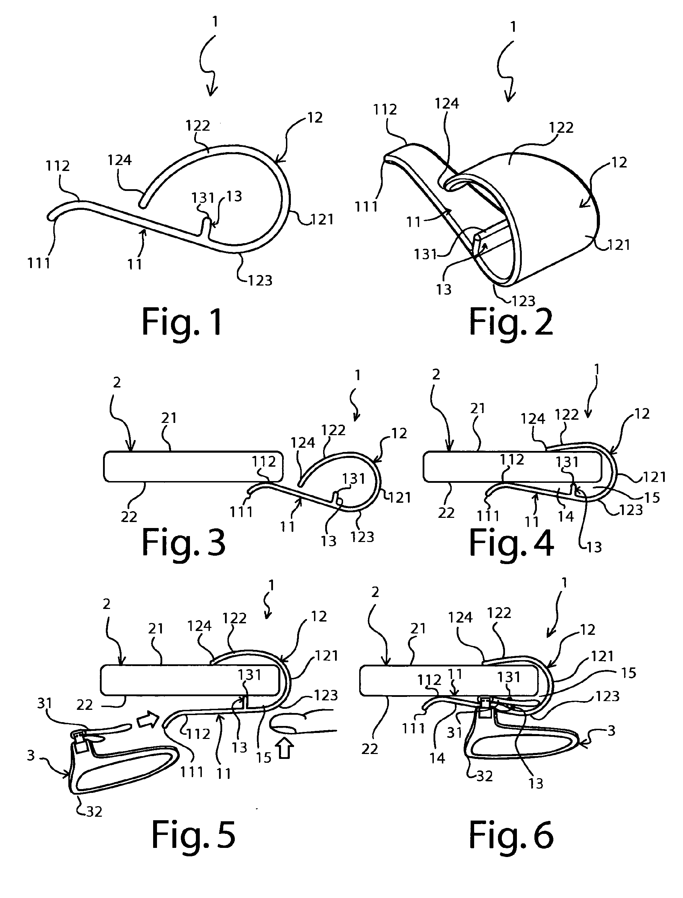

Si l'on se réfère aux Figures 1 et 2, on peut voir que l'on y a représenté un mode de réalisation préféré du porte-objets 1 selon la présente invention.

Le porte-objets 1 est formé d'une pièce d'un seul tenant et composée d'une languette 11, d'une pièce en retour 12 et d'une patte 13 (ou saillie).

La languette 11 se présente sous la forme d'une bande de matière allongée s'effilant d'une extrémité large à une extrémité libre 111 plus étroite et légèrement recourbée à l'opposé de la pièce en retour 12, formant une zone arrondie 112. La partie de la languette 11 entre la zone arrondie 112 et l'extrémité large est rectiligne.

La pièce en retour 12 se présente sous la forme d'une bande de matière allongée composée d'une première et d'une seconde section de pièce en retour respectivement 121 et 122.

La première section de pièce en retour 121, ou première section 121, s'étend à partir de l'extrémité large de la languette 11, en formant une zone de liaison 123 tout d'abord dans le prolongement de la languette 11 puis qui se recourbe vers cette dernière, le profil transversal de la première section 121 suivant un demi-cercle de sorte que l'extrémité de la première section 121 est globalement en regard de la zone de liaison 123.

De plus, la première section de liaison 121 s'élargit à partir de la zone de liaison 123 jusqu'à mi-longueur de la première section 121, puis s'effile jusqu'à son autre extrémité à partir de laquelle s'étend la seconde section de pièce en retour 122, ou seconde section 122.

La seconde section 122 se présente également sous la forme d'une bande de matière allongée s'étendant tout d'abord dans le prolongement de la première section 121 puis se recourbant vers la languette 11, son extrémité libre 124 se trouvant au voisinage de la languette 11 et à mi-longueur de cette dernière. La seconde section 122 s'effile de son extrémité de liaison à la première section 121 à son extrémité libre 124.

La patte 13, ayant une bordure libre 131, est portée par la languette 11 au voisinage de la zone de liaison 123 et se projette, à angle droit de la languette 11, vers la surface de la pièce en retour 12 tournée vers la languette 11. La patte 13 est transversale à la ligne longitudinale moyenne de la languette 11 et s'étend sur toute la largeur de cette dernière.

La languette 11, les première et seconde sections 121 et 122 et la patte 13 sont réalisées en une matière élastiquement déformable et les différentes bandes de matière ont la même épaisseur.

Dans le mode de réalisation représenté, le porte-objets 1 est réalisé en une seule pièce, les différentes bandes de matière mentionnées ci-dessus consistant donc en une seule bande de matière.

L'utilisation du porte-objets 1 va maintenant être décrite avec référence aux Figures 3 à 6.

Si l'on se réfère tout d'abord à la Figure 3, on peut voir que l'on y a représenté le porte-objets 1 au début de sa mise en place sur un support 2 de type plaque, dont seul le bord est représenté, lequel présente une première surface 21 et une seconde surface 22 parallèles l'une à l'autre.

Pour fixer le porte-objets 1 au bord du support 2, on positionne, par exemple, la région de l'extrémité libre 111 de la languette 11 en regard de la seconde surface 22 et on place la zone arrondie 112 en contact contre la seconde surface 22.

On écarte ensuite de la première languette 11 l'extrémité libre 124 de la pièce en retour 12 et l'on fait avancer le porte-objets 1 sur le support 2 pour amener ce dernier dans l'espace ainsi créé entre la languette 11 et la première section 122 de la pièce en retour 12.

On relâche ensuite la première section 122, laquelle vient alors appuyer contre la première surface 21 du support 2.

L'élasticité de la matière utilisée pour le porte-objets 1 et le fait qu'elle a été déformée lors de l'écartement de la languette 11 et de la seconde section 122 de la pièce en retour 12, tendent à ramener la languette 11 et la seconde section 122 l'une vers l'autre.

Par conséquent, en position de repos, le porte-objets 1 est maintenu de façon fiable sur le support 2 par une action de pincement entre l'extrémité libre 124 de la seconde section 122 en contact avec la première surface 21 et la zone arrondie 112 de la languette 11 en contact avec la seconde surface 22 du support 2, surface 22 avec laquelle la bordure libre 131 de la patte 13 est en contact, comme représenté sur la Figure 4.

On peut également voir sur cette Figure que la languette 11 s'écarte progressivement de la seconde surface 22 du support 2, à partir de la zone arrondie 112. De cette manière, la zone de liaison 123 est espacée du support 2.

De plus, en raison de sa forme en arc de cercle, la première section 121 de la pièce en retour 12 est également écarté du bord du support 2.

Enfin, l'espace formé entre la seconde surface 22 du support 2 et la languette 1 est séparé par la patte 13 en un premier espace 14 destiné à recevoir un ou plusieurs objets pour un accrochage en suspension de ceux-ci et un second espace 15 permettant l'ouverture du porte-objets 1.

En effet, avec référence à la Figure 5, lorsque l'on souhaite suspendre un ou plusieurs objets au support 2, le porte-objets 1 étant déjà en position de repos, il suffit de venir appuyer, par exemple avec un doigt, au niveau de la zone de liaison 123, depuis l'extérieur du porte-objets 1, pour écarter du support 2 la région d'extrémité libre de la languette 11 et ouvrir le premier espace de réception d'objet 14, la bordure libre 131 de la patte 13 servant de point de pivotement pour que la partie de la languette 11 allant de la patte 13 à l'extrémité libre 111 puisse basculer à l'opposé du support 2.

Une telle ouverture du porte-objets 1 par basculement de la languette 11 est permise par l'aptitude à la déformation de la languette 11 et de la partie en retour 12, par la présence du second espace 15 entre la zone de liaison 123 et le support 2 et par le fait que la bordure libre 131 de la patte 13 est en appui contre le support 2.

Une fois le porte-objets 1 dans sa position ouverte, comme représenté sur la Figure 5, il suffit de placer l'objet dans le premier espace de réception d'objet 14, puis de relâcher la pression sur la zone de liaison 123, l'élasticité de la matière utilisée pour le porte-objets 1 ramenant la zone arrondie 112 de la languette 11 contre la seconde surface 22 du support 2 et fermant le premier espace 14.

Il convient de souligner que l'on pourrait également placer un objet, par exemple une ou plusieurs feuilles, de telle sorte que l'objet est maintenu en étant pris en sandwich entre la zone arrondie 112 et le support 2 lorsque l'on relâche la pression sur la zone de liaison 121.

Dans le cas de l'utilisation du porte-objets 1 comme porte-lunettes, ce qui a été représenté sur les Figures 5 et 6, les branches 31 des lunettes 3 sont repliées l'une contre l'autre et bloquées dans le premier espace 14, entre la zone arrondie 112, la patte 13 et le support 2. Les lunettes 3 sont ainsi suspendues à la languette 11, les branches 31 reposant sur la surface de la languette 11 tournée vers le support 2.

Pour ce faire, lorsque le porte-objets 1 est en position ouverte, on enfile sur la languette 11 les lunettes 3, avec les branches 31 repliées l'une contre l'autre, en faisant passer la languette 11 entre les branches 31 et le nez 32 des lunettes 3, comme représenté sur la Figure 5, puis on relâche la pression exercée sur la zone de liaison 121.

Les lunettes 3 sont alors suspendues de manière sûre par leurs branches 31. Bien entendu, les lunettes 3 peuvent être suspendues par leur nez 32.

En outre, la patte 13 permet de retenir les branches 31 ou le nez 32 des lunettes 3 dans un espace plus réduit, ce qui permet d'éviter que les lunettes 3 ne se déplacent lorsqu'elles sont suspendues par le porte-objets 1.

Lorsque l'on souhaite récupérer les lunettes 3, il suffit d'exercer à nouveau une pression sur la zone de liaison 123 pour écarter la languette 11 du support 2, ouvrir le premier espace 14 et avoir accès aux lunettes 3.

Dans certains cas, l'épaisseur des branches 31 des lunettes 3 peut être telle que la bordure libre 131 de la patte 13 ne soit pas en contact avec le support 2 en position d'accrochage du porte-objets 1. On peut alors retirer les lunettes 3 en tirant simplement dessus de façon à écarter la languette 11 du support 2. De la manière que lors du passage de la position de repos à la position ouverture du porte-objets 1, l'écartement de la languette 11 par les lunettes 3 produit un effet de levier qui cette fois-ci tend à ramener la zone de liaison 123 vers le support 2, renforçant ainsi l'action de blocage sur le support 2.

Par conséquent, le porte-objets 1 selon la présente invention permet, dans tous les cas, de placer des lunettes 3 dans le porte-objets 1 et de les retirer de celui-ci sans risque de détachement du porte-objets 1 du support 2 sur lequel il est fixé.

Il est bien entendu que le mode de réalisation qui a été décrit ci-dessus a été donné à titre indicatif et non limitatif et que des modifications peuvent être apportées sans que l'on s'écarte pour autant du cadre de la présente invention.

## Revendications

1. Porte-objets (1) destiné à être fixé de manière amovible sur le bord d'un support (2) de type plaque, lequel porte-objets (1) comprend une languette (11) ayant une extrémité libre (111) et portant à son autre extrémité, en formant une zone de liaison (123), une pièce (12) en retour vers la languette (11), la languette (11) et la pièce en retour (12) étant déformables élastiquement de telle sorte que le porte-objets (1) est apte, en position dite de repos du porte-objets (1), à pincer le bord du support (2) entre les régions d'extrémité libre de la languette (11) et de la pièce en retour (12), et, en position dite d'accrochage, à retenir par accrochage au moins un objet (3) entre le support (2) et la languette (11), **caractérisé par le fait que** la languette (11) porte, au voisinage de la zone de liaison (123), une saillie qui est dirigée vers la pièce en retour (12) et dont l'extrémité libre est en contact avec le support (2) en position de repos du porte-objets (1), la zone de liaison (123) étant écartée du support (2).

2. Porte-objets (1) selon la revendication 1, **caractérisé par le fait que** la saillie consiste en une patte (13) dont la bordure libre (131) forme l'extrémité libre de la saillie en contact avec le support (2) en position de repos du porte-objets (1).

3. Porte-objets (1) selon l'une des revendications 1 et 2, **caractérisé par le fait que** la saillie, le cas échéant la patte (13), constitue une saillie de retenue du ou des objets (3) accrochés au porte-objets (1), le ou les objets (3) étant accrochés par suspension par une partie de ceux-ci se trouvant dans l'espace formé entre la saillie, la languette (11) et le support (2) en position d'accrochage du porte-objets (1).

4. Porte-objets (1) selon l'une des revendications 1 à 3, **caractérisé par le fait que** la languette (11), la saillie et la pièce en retour (12) sont réalisées en une seule pièce.

5. Porte-objets (1) selon l'une des revendications 1 à 4, **caractérisé par le fait que** la région d'extrémité libre de la languette (11) est recourbée dans une direction opposée à la direction de projection de la saillie (13) de façon à définir une zone arrondie (112).

6. Porte-objets (1) selon l'une des revendications 1 à 5, **caractérisé par le fait que**, lorsqu'il n'est pas fixé au support (2), l'extrémité libre (124) de la pièce en retour (12) se trouve au voisinage de la languette (11), à mi-longueur de celle-ci.

7. Porte-objets (1) selon l'une des revendications 1 à 6, **caractérisé par le fait que** la zone de liaison (123) entre la languette (11) et la pièce en retour (12) a une forme en arc de cercle, recourbée vers la languette (11).

8. Porte-objets (1) selon l'une des revendications 1 à 7, **caractérisé par le fait que** la languette (11) est effilée de la pièce en retour (12) à l'extrémité libre (111) de la languette (11).

9. Porte-objets (1) selon l'une des revendications 1 à 8, **caractérisé par le fait que** la saillie forme un angle droit avec la languette (11).

10. Porte-objets (1) selon l'une des revendications 1 à 9, **caractérisé par le fait qu'**il est réalisé en matière plastique injectée.

11. Porte-objets (1) selon l'une des revendications 1 à 10, constituant un porte-lunettes, **caractérisé par le fait que** l'espace (14) formé, en position de repos porte-objets (1), par le support (2), la saillie et la région de la languette (11) située entre la saillie et la région d'extrémité libre de la languette (11), est de dimension suffisante pour recevoir les branches (31) repliées l'une contre l'autre ou le nez (32) d'une paire de lunettes (3).

## Patentansprüche

1. Objekthalter (1), der zur lösbaren Befestigung an der Kante eines plattenartigen Trägers (2) vorgesehen ist, wobei der Objekthalter (1) eine Zunge (11) umfasst, die ein freies Ende (111) aufweist und an ihrem anderen Ende, unter Bildung eines Verbindungsbereichs (123), einen Abschnitt (12) trägt, der nach hinten zur Zunge (11) hin gerichtet ist, wobei die Zunge (11) und der nach hinten gerichtete Abschnitt (12) elastisch verformbar sind, so dass der Objekthalter (1) in einer Ruheposition des Objekthalters (1) geeignet ist, die Kante des Trägers (2) zwischen den freien Endbereichen der Zunge (11) und des nach hinten gerichteten Abschnitts (12) zu umklammern und, in einer Einhakposition, mindestens ein Objekt (3) zwischen dem Träger (2) und der Zunge (11) durch Einhaken zu halten, **dadurch gekennzeichnet, dass** die Zunge (11) in der Nähe des Verbindungsbereichs (123), einen Vorsprung trägt, der zum nach hinten gerichteten Abschnitt (12) hin ausgerichtet ist und dessen freies Ende sich in der Ruheposition des Objekthalters (1) im Kontakt mit dem Träger (2) befindet, wobei der Verbindungsbereich (123) vom Träger (2) räumlich getrennt ist.

2. Objekthalter (1) nach Anspruch 1, **dadurch gekennzeichnet, dass** der Vorsprung eine Lasche (13) ist, deren freier Rand (131) in der Ruheposition des Objekthalters (1) das freie Ende des Vorsprungs im Kontakt mit dem Träger (2) bildet.

3. Objekthalter (1) nach einem der Ansprüche 1 und 2, **dadurch gekennzeichnet, dass** der Vorsprung, gegebenenfalls die Lasche (13), einen Vorsprung zum Halten des Objekts oder der Objekte (3) darstellt, die am Objekthalter (1) eingehakt sind, wobei das Objekt oder die Objekte (3) durch Aufhängen an einem Abschnitt des-/derselben eingehakt ist/sind, der innerhalb des Raumes platziert ist, welcher zwischen dem Vorsprung, der Zunge (11) und dem Träger (2) in der Einhakposition des Objekthalters (1) entsteht.

4. Objekthalter (1) nach einem der Ansprüche 1 bis 3, **dadurch gekennzeichnet, dass** die Zunge (11), der Vorsprung und der nach hinten gerichtete Abschnitt (12) als ein Stück gefertigt sind.

5. Objekthalter (1) nach einem der Ansprüche 1 bis 4, **dadurch gekennzeichnet, dass** der freie Endbereich der Zunge (11) in einer Richtung gebogen ist, die der Richtung entgegengesetzt ist, in die der Vorsprung (13) vorsteht, um einen gerundeten Bereich (112) zu definieren.

6. Objekthalter (1) nach einem der Ansprüche 1 bis 5, **dadurch gekennzeichnet, dass**, wenn es nicht am Träger (2) befestigt ist, das freie Ende (124) des nach hinten gerichteten Abschnitts (12) in der Nähe der Zunge (11), bei ihrer halben Länge, platziert ist.

7. Objekthalter (1) nach einem der Ansprüche 1 bis 6, **dadurch gekennzeichnet, dass** der Verbindungsbereich (123) zwischen der Zunge (11) und dem nach hinten gerichteten Abschnitt (12) die Form eines Kreisbogens aufweist, der zur Zunge (11) hin gebogen ist.

8. Objekthalter (1) nach einem der Ansprüche 1 bis 7, **dadurch gekennzeichnet, dass** sich die Zunge (11) vom nach hinten gerichteten Teil (12) zum freien Ende (111) der Zunge (11) hin verjüngt.

9. Objekthalter (1) nach einem der Ansprüche 1 bis 8, **dadurch gekennzeichnet, dass** der Vorsprung mit der Zunge (11) einen rechten Winkel bildet.

10. Objekthalter (1) nach einem der Ansprüche 1 bis 9, **dadurch gekennzeichnet, dass** es aus gespritztem Kunststoff besteht.

11. Objekthalter (1) nach einem der Ansprüche 1 bis 10, der einen Brillenhalter darstellt, **dadurch gekennzeichnet, dass** der Raum (14), der in der Ruheposition des Objekthalters (1) durch den Träger (2), den Vorsprung und den Bereich der Zunge (11) entsteht, der sich zwischen dem Vorsprung und dem freien Endbereich der Zunge (11) befindet, groß genug ist, um die Bügel (31) die gegeneinander hin eingeklappt sind oder den Steg (32) einer Brille (3) aufzunehmen.

## Claims

1. Object holder (1) which is intended to be removably fastened to the edge of a plate type support (2), which object holder (1) comprises a tongue (11) having a free end (111) and carrying at its other end, with forming a connection area (123), a part (12) which is turned back toward the tongue (11), the tongue (11) and the turned-back part (12) being resiliently deformable such that the object holder (1) is able, in a rest position of the object holder (1), to clamp the edge of the support (2) between the free end regions of the tongue (11) and of the turned-back part (12), and, in a hooking position, to hold at least one object (3) between the support (2) and the tongue (11) by means of hooking, **characterized by** the fact that the tongue (11) carries, in the vicinity of the connection area (123), a protrusion which is directed toward the turned-back part (12) and the free end of which is in contact with the support (2) in the rest position of the object holder (1), the connection area (123) being spaced apart from the support (2).

2. Object holder (1) according to claim 1, **characterized by** the fact that the protrusion consists in a tab (13) the free border (131) of which forms the free end of the protrusion in contact with the support (2) in the rest position of the object holder (1).

3. Object holder (1) according to one of claims 1 and 2, **characterized by** the fact that the protrusion, where appropriate the tab (13), constitutes a protrusion for holding the one or more objects (3) which are hooked to the object holder (1), the one or more objects (3) being hooked by means of hanging by a part thereof which is located within the space formed between the protrusion, the tongue (11) and the support (2) in the hooking position of the object holder (1).

4. Object holder (1) according to one of claims 1 to 3, **characterized by** the fact that the tongue (11), the protrusion and the turned-back part (12) are made as a single piece.

5. Object holder (1) according to one of claims 1 to 4, **characterized by** the fact that the free end region of the tongue (11) is bent in a direction opposite to the protruding direction of the protrusion (13) in order to define a rounded area (112).

6. Object holder (1) according to one of claims 1 to 5, **characterized by** the fact that, when it is not fastened to the support (2), the free end (124) of the turned-back part (12) is located in the vicinity of the tongue (11), mid-length thereof.

7. Object holder (1) according to one of claims 1 to 6, **characterized by** the fact that the connection area (123) between the tongue (11) and the turned-back part (12) has the shape of an arc of circle, which is bent toward the tongue (11).

8. Object holder (1) according to one of claims 1 to 7, **characterized by** the fact that the tongue (11) is tapered from the turned-back part (12) to the free end (111) of the tongue (11).

9. Object holder (1) according to one of claims 1 to 8, **characterized by** the fact that the protrusion forms a right angle with the tongue (11).

10. Object holder (1) according to one of claims 1 to 9, **characterized by** the fact that it is made of injected plastic material.

11. Object holder (1) according to one of claims 1 to 10, constituting a glasses holder, **characterized by** the fact that the space (14) which is formed, in the rest position of the object holder (1), by the support (2), the protrusion and the region of the tongue (11) which is located between the protrusion and the free end region of the tongue (11), has a sufficient size to accommodate the temples (31) which are folded against each other or the nose (32) of a pair of glasses (3).
